# EUROPÄISCHE PATENTSCHRIFT

(11) **EP 1 779 194 B1**
(45) Veröffentlichungstag und Bekanntmachung des Hinweises auf die Patenterteilung: **15.02.2012**
(21) Anmeldenummer: 05768009.2
(22) Anmeldetag: 03.08.2005
(51) Int. Cl.: G03B 21/58, G03B 21/56

(54) **LEINWANDBEFESTIGUNG**
PROJECTION SCREEN FASTENING
FIXATION D'ECRAN DE PROJECTION

(30) Priorität: 19.08.2004 DE 102004040181
(43) Veröffentlichungstag der Anmeldung: 02.05.2007
(73) Patentinhaber: Stumpfl GmbH, 4701 Bad Schallerbach (AT)
(72) Erfinder: STUMPFL, Reinhold, A-4701 Bad Schallerbach (AT)
(74) Vertreter: Burger, Hannes
(86) Internationale Anmeldenummer: PCT/AT2005/000310
(87) Internationale Veröffentlichungsnummer: WO 2006/024054

(56) Entgegenhaltungen:
- BE-A3- 1 003 554
- US-A- 2 827 955
- US-A- 3 002 557
- US-A- 4 947 561
- US-A- 5 581 401
- US-A- 5 906 078
- PATENT ABSTRACTS OF JAPAN Bd. 1996, Nr. 12, 26. Dezember 1996 (1996-12-26) -& JP 08 201920 A (DAINIPPON PRINTING CO LTD), 9. August 1996 (1996-08-09)

## Beschreibung

Die Erfindung betrifft ein Bildwandtuch aus einem reflektierenden bzw. transluzierenden, flexiblen Material zur Wiedergabe von projizierten Bildern mit einer Fläche mit Endbereichen an den Längs- und Querseiten der Fläche in denen Befestigungsmittel zur Halterung des Bildwandtuches an einem oder mehreren Rahmenelementen eines Rahmensystem angeordnet sind, ein Rahmensystem, bestehend aus mehreren Rahmenelementen, wobei diese von einem Profil mit Seitenflächen mit einer Innen- und einer Außenwand gebildet werden, die entlang ihrer Längsrichtung zumindest eine Ausnehmung aufweisen, wobei diese von der Außenwand der Seitenflächen des Profils begrenzt sind, und sich vorzugsweise ein Querschnitt der Ausnehmung in Richtung auf ein Ausnehmungsgrund erweitert, eine Projektionswand zur reflektierenden Wiedergabe von projizierten Bildern aus einem reflektierenden bzw. transluzierenden, flexiblen Material und mit einem das Bildwandtuch aufnehmenden Rahmen und ein Befestigungsmittel zur Befestigung eines Bildwandtuches an einem Rahmensystem.

Durch die gesteigerte Mobilität von Personen ist es notwendig Gegenstände derart auszugestalten, dass sie von einem Ort zum anderen transportiert werden können, ohne für den Transport ein zu großes Volumen einzunehmen und ohne dabei Beschädigungen zu erleiden.

Eine mobile Projektionswand zur Projektion von Bildern macht die Projektion von vor Ort bestehenden Einrichtungen unabhängig. Es ist notwendig eine Projektionswand sowohl im Wohnbereich in unterschiedlichen Räumen als auch an verschiedenen Veranstaltungsorten, wie z.B. Kirchen, öffentlichen Plätzen, Stadion, etc., aufstellen zu können. Dabei müssen die Projektionswände hohe Qualitätsanforderungen erfüllen.

Eine Projektionswand besteht aus einem Rahmensystem und einem Bildwandtuch, wobei das Bildwandtuch auf dem Rahmen befestigt wird.

Aus der DE 296 12 098 U1 ist ein Spannrahmen für eine zu bemalende Leinwand bekannt, mit in jedem Gärungsstoß der Rahmenleisten angeordneten, in die benachbarten Rahmenleisten eingreifenden Verschiebeführungen und Nachstellmittel zum Nachspannen der Leinwand. Für das Nachspannen der Leinwand können beispielsweise in die Gärungsstöße des Rahmens Keile eingesteckt werden, die von Zeit zu Zeit durch Druckbeaufschlagung weiter in den Gärungsstoß hineingedrückt werden, sodass die Rahmenleisten im Gärungsstoß zum Spannen der Bildwand auseinandergehen. In jedem Gärungsstoß greifen zwei Führungszapfen in die beiden benachbarten Rahmenleisten als Verschiebeführungen ein und zwischen den Führungszapfen ist als Nachstellmittel eine Druckfeder in die Rahmenleisten eingesetzt, welche ein automatisches Nachspannen der Leinwand ergibt.

Aus der DE 689 19 719 T2 ist ein Spannrahmen für eine Leinwand bekannt, der aus mehreren Abschnitten besteht, die mit einer gewählten polygonalen Kontur zusammengesetzt sind, wobei die genannten Abschnitte von Profilen gebildet werden. Die Profile weisen entlang ihrer Außenkanten in Längsrichtung mindestens eine Rille auf, wobei die genannte Rille geeignet ist, einen Rand einer Leinwand aufzunehmen, die auf dem genannten Rahmen angeordnet ist. Weiters weisen die Profile eine längliche Spannvorrichtung auf, die sich über den gesamten Umfang des Rahmens erstreckt und in der genannten Rille festgehalten wird. Die Wände der Außenkante des Profils, die die genannte Rille umschließen, weisen Endabschnitte auf, die eine verengte Öffnung der genannten Rille ergeben. Die Spannvorrichtung besteht aus einer länglichen Stange, die eine ebene Basis, die in Anlage an die Endabschnitte außerhalb der Rille kommen soll und breiter ist als die verengte Öffnung, sowie zwei parallele, von der genannten ebenen Basis hervorstehende Flügel aufweist, die auf ihren voneinander abgewandten Seiten Wülste haben, die dazu dienen in die genannte Öffnung einzurasten. Nachteilig an der vorliegenden Erfindung ist, dass auch die Leinwand in die Rille eingefügt werden muss und dadurch eine sehr hohe Materialbeanspruchung der Leinwand verursacht wird.

Nachteilig im Stand der Technik ist, dass es praktisch unmöglich ist, den Rahmen zerlegbar und wieder zusammensetzbar, was für den Transport von großen Rahmen notwendig ist, auszugestalten.

Weitere Leinwände Sind in US 2827955 A und BE 1003554 A gezeigt.

Aufgabe der Erfindung ist es, eine Projektionswand, insbesondere eine Bildwand, zur Verfügung zu stellen, durch welche eine möglichst gleichmäßige Spannung des Bildwandtuches gewährleistet wird.

Die Aufgabe der Erfindung wird durch das Bildwandtuch nach Anspruch 1 und die Projektionswand nach Anspruch 14 gelöst.

Dabei wird der Vorteil erzielt, dass das Bildwandtuch mit einer möglichst gleichmäßigen Spannung auf dem Rahmensystem befestigt werden kann. Weiters erweist sich dabei von Vorteil, dass beispielsweise durch Temperaturschwankungen oder durch Feuchtigkeitsschwankungen die ursprüngliche Spannung des Bildwandtuches wieder hergestellt werden kann, weil die Befestigungsmittel des Bildwandtuches auf dem Rahmensystem verschiebbar angeordnet sind.

In einer alternativen Ausführungsvariante erweist sich als vorteilhaft, wenn das zumindest eine Befestigungsmittel mit einer Basis und zwei davon abstehenden, einander gegenüberliegenden Schenkeln, die über die Basis miteinander verbunden sind, gebildet ist, weil dadurch das Bildwandtuch nicht an diskreten Fixierungspunkten am Rahmensystem befestigt werden muss, sondern an beliebigen Stellen fixiert werden kann und im Anschluss an die richtige Position zur optimalen Spannung des Bildwandtuches verschoben werden kann.

Nach Weiterbildungen der Erfindung, wonach die Befestigungsmittel federelastisch ausgebildet sind oder aus einem verformbaren Material, wie z.B. Elastomer, Kunststoff, Metall etc. bestehen, erweist sich von Vorteil, dass das Befestigungsmittel durch Ausüben eines leichten Drucks auf dem Rahmensystem einfach befestigt werden kann und in weiterer Folge verschiebbar bleibt.

Von Vorteil zeigt sich auch, wenn am Befestigungsmittel zumindest ein Steg in gleicher Richtung der Schenkel angeordnet ist, dadurch eine noch bessere Verbindung des Bildwandtuches am Rahmensystem ermöglicht wird und dadurch die Stabilität der Projektionswand erhöht wird.

Vorteilhaft ist weiters, wenn zumindest ein Teil des Befestigungsmittels mit dem Bildwandtuch beispielsweise durch Verschrauben, Verkleben, Klammern, Klemmen, Schweißen, etc., verbunden sind, wodurch über eine längere Zeitspanne die Befestigung der Befestigungsmittel auf dem Bildwandtuch gewährleistet wird.

Des weiteren erweist sich als vorteilhaft, dass die Befestigungsmittel zumindest bereichsweise an den Endbereichen des Bildwandtuches angeordnet sind, wodurch eine größt mögliche Fläche zur Projektion von Bildern auf dem Bildwandtuch zur Verfügung steht.

Von Vorteil ist auch, dass mehrere Befestigungsmittel in gleichmäßigen Abständen angeordnet sind, wodurch die Spannung des Bildwandtuches sehr gleichmäßig erfolgt.

Weiters erweist sich dabei von Vorteil, dass bei einem Ausfall einer Befestigungseinrichtung die benachbarten Befestigungsmittel die Spannung des Bildwandtuches aufrecht erhalten können.

In einer alternativen Ausführungsvariante des Bildwandtuches ist vorgesehen, dass zwischen den Befestigungsmitteln und dem Bildwandtuch ein Verbindungselement angeordnet ist, wodurch nicht nur eine Flexibilität der Befestigungsmittel des Bildwandtuches gegenüber dem Rahmensystem gegeben ist, sondern auch eine Flexibilität der Befestigungsmittel gegenüber dem Bildwandtuch hergestellt wird und dadurch auch das Bildwandtuch selbst in Bezug auf die Befestigungsmittel nachgespannt werden kann.

Gemäß einer weiteren Ausführungsvariante ist vorgesehen, dass im Bereich der Befestigungsmittel und/oder in den Endbereichen eine Verstärkung ausgebildet ist, wodurch auch bei starker Beanspruchung der Verbindung der Befestigungsmittel mit dem Bildwandtuch eine hohe Stabilität und in weiterer Folge eine lange Lebenserwartung gewährleistet ist.

Weiters erweist sich von Vorteil, dass durch die Verstärkung in den Endbereichen des Bildwandtuches das Aufspannen desselben leichter und einfacher erfolgen kann.

Das Verbindungselement umfasst eine Rasteinrichtung, wodurch eine gewisse Flexibilität hinsichtlich der Spannung durch mehrere Raststellungen des Befestigungsmittels im Verbindungselement aufweisen kann. Des weiteren wird durch dieses Verbindungselement eine völlige Abtrennung des Befestigungsmittels ermöglicht, sodass dieses gegebenenfalls ausgetauscht werden kann bzw. wird damit, auch bei nur einer einzigen Raststellung, eine größere Flexibilität hinsichtlich des Zusammenbaus erreicht.

Die Befestigungsmittel können auf dem Bildwandtuch entlang ihrer Längserstreckung verstellbar angeordnet sein, wodurch eine Spannung des Bildwandtuches in Bezug auf das Rahmensystem jederzeit und unter sehr geringer Kraftanwendung und sehr einfach durchgeführt werden kann.

Gemäß einer Ausführungsvariante kann das Verbindungselement als scheibenförmige Grundplatte mit dem darauf angeordneten Rastelement ausgebildet sein, wodurch die großflächige Verbindung des Verbindungselementes mit dem Bildwandtuch und damit ein sicherer Halt und eine höhere Ausreißfestigkeit des Verbindungselementes am Bildwandtuch ermöglicht wird, insbesondere durch Verschweißen der Grundplatte mit dem Bildwandtuch.

Es ist weiters möglich, dass das Rastelement im Querschnitt betrachtet zumindest annähernd U-förmig mit einer, insbesondere zumindest annähernd parallel zur Grundplatte orientierten Basis und zwei daran angeordneten Stegen gebildet ist, wobei die Stege mit der Grundplatte derart verbunden sind, dass zwischen der Grundplatte und der Basis eine Ausnehmung für das Befestigungsmittel entsteht, sodass es also möglich wird, die beiden Funktionen "Verbindung mit dem Bildwandtuch" und andererseits "die Herstellung einer Verbindung zwischen dem Bildwandtuch, d.h. in diesem Fall dem Verbindungselement und dem Rahmensystem" zu trennen und damit ein höhere Flexibilität zu erreichen.

Von Vorteil ist es auch, wenn die Grundplatte aus einem schweißbaren Kunststoff besteht, da damit ein sicherer Halt des Verbindungselementes am Bildwandtuch ermöglicht wird.

In der Basis des Rastelementes kann eine Ausnehmung zur Aufnahme eines alternativen Befestigungsmittels, wie beispielsweise eines Druckknopfes, angeordnet sein, sodass also das erfindungsgemäße Bildwandtuch auch für herkömmliche Projektionswände, welche über Druckknöpfe verfügen, verwendet werden kann und damit auch die Flexibilität des Systems erhöht werden kann.

Das Befestigungsmittel kann im Querschnitt betrachtet zumindest annähernd L-förmig ausgebildet sein und in der Basis des Befestigungsmittels eine sich von einem dem Schenkel gegenüberliegenden Randbereich in Richtung auf den Schenkel sich erstreckende Ausnehmung aufweisen bzw. können gemäß einer Weiterbildung hierzu die verbleibenden Randbereiche der Basis des Befestigungsmittels zumindest annähernd hakenförmig ausgebildet sein, wodurch nicht nur das Einschieben des Befestigungsmittels in das Verbindungselement erleichtert, sondern auch der Halt desselben im Verbindungselement erhöht wird.

Es ist weiters möglich, dass in einem von der Basis des Befestigungsmittels abgewandten Endbereich des Schenkels über dessen gesamte Länge eine Ausnehmung angeordnet ist und die beiden dadurch entstehende Teilendbereiche gegebenenfalls zumindest annähernd hakenförmig ausgebildet sind, wodurch einerseits das Einscheiben des Befestigungsmittels in eine entsprechende Ausnehmung eines Rahmensystems erleichtert wird und andererseits damit auch der Halt dieses Befestigungsmittels im Rahmensystem verbessert wird.

Der Druckknopf kann in die Ausnehmung der Basis des Verbindungselementes eingepresst sein, wodurch der Herstellvorgang vereinfacht werden kann.

Das Rahmensystem kann einteilig ausgeführt sein, wodurch es vor Ort unabhängig von bestehenden Einrichtungen aufgestellt werden kann. Weiters erweist sich dadurch von Vorteil, dass die einzelnen Rahmenelemente nicht miteinander verwechselt werden können bzw. dass die Rahmenelemente des Rahmensystems nicht verloren gehen.

Ein einteiliges Rahmensystem erweist sich weiters von Vorteil, weil dadurch das Rahmensystem auf einfachste und schnellst mögliche Weise aufgebaut werden kann, wodurch dieses System auch für die Vermietung geeignet ist.

Des weiteren erweist sich dabei von Vorteil, dass der Auf- und Abbau ohne Werkzeuge erfolgen kann.

Von Vorteil zeigt sich auch, wenn das Profil im Querschnitt geschlossen ist, da dadurch eine höhere Stabilität des Rahmensystems erzielt wird und die Tragkraft des Rahmensystems erhöht wird.

In einer Ausführungsvariante ist vorgesehen, dass das Profil hohl ist, wodurch das Gewicht des Rahmensystems, um es beispielsweise für Transportzwecke zu verwenden oder den Aufbau des Rahmensystems zu erleichtern, sehr niedrig gehalten werden kann.

Gemäß einer Weiterbildung des Rahmensystems kann das Profil teleskopartig ausgebildet sein, wodurch die Größe der Projektionsfläche variiert werden kann und durch das Rahmensystem ein sehr hohes Maß an Flexibilität gewährleistet wird. Des weiteren erweist sich dabei als vorteilhaft, dass das Bildwandtuch durch die teleskopartige Ausbildung des Rahmensystems optimal gespannt werden kann.

Weiters erweist sich auch von Vorteil, dass das Profil aus einem Metall, vorzugsweise aus Aluminium, hergestellt ist, wodurch ein sehr geringes Gewicht des Rahmensystems erzielt wird und in weiterer Folge der Transport und der Aufbau des Rahmensystems erleichtert wird.

In einer Weiterbildung des Rahmensystems ist vorgesehen, dass das Profil aus einer gehärteten Aluminiumlegierung extrudiert ist, wonach eine hohe Festigkeit bei geringem Gewicht erzielt werden kann.

Dadurch, dass das Profil im Querschnitt viereckig ist, wird eine standardisierte Produktion des Profils ermöglicht, welche sehr kostengünstig durchgeführt werden kann.

In einer Ausführungsvariante ist vorgesehen, dass jeweils eine Längs- und eine Querseite des Profils abweichend von einem rechten Winkel zueinander angeordnet sind, wodurch bei Spannung des Bildwandtuches auf dem Rahmensystem die vier Seitenflächen bzw. die zwei einander gegenüberliegenden Längsseiten des Profils nicht durch das Bildwandtuch durchgedrückt werden und somit eine plane Projektionsfläche vorliegt.

Gemäß Ausführungsvarianten ist vorgesehen, dass die Ausnehmungen in derselben Seitenflächen des Profils angeordnet sind, bzw. dass die Ausnehmungen in einander gegenüberliegenden Seitenflächen des Profils angeordnet sind bzw. dass mehrere Ausnehmungen in mehreren Seitenflächen des Profils angeordnet sind, wodurch eine variable Möglichkeit zur Aufnahme eines Befestigungsmittels im Rahmensystem geschaffen wird und somit das Bildwandtuch verstellbar am Rahmensystem befestigt werden kann und

In einer Ausführungsvariante ist vorgesehen, dass die Ausnehmung sich über die gesamte Wandstärke des Profils erstreckt und dadurch einen Durchbruch bildet, wodurch das Befestigungsmittel zur Gänze in das Profil geschoben werden kann und auch das Gewicht des Rahmensystems verringert werden kann.

Von Vorteil ist, wenn eine Längsseitenwand des Profils im Querschnitt betrachtet eine Abmessungen aus einem Bereich mit einer oberen Grenze von 20 cm, insbesondere 15 cm, vorzugsweise 10 cm und einer unteren Grenze von 4 cm, vorzugsweise 6 cm, insbesondere 8 cm, aufweist bzw. eine Querseitenwand des Profils im Querschnitt betrachtet eine Abmessungen aus einem Bereich mit einer oberen Grenze von 15 cm, insbesondere 10 cm, vorzugsweise 5 cm und einer unteren Grenze von 1 cm, vorzugsweise 2 cm, insbesondere 3 cm, aufweist, wonach das Profil unter standardisierten Bedingungen hergestellt werden kann und dadurch die Produktionskosten niedrig gehalten werden können.

In weiteren Ausführungen ist vorgesehen, dass die zumindest eine Ausnehmung einen U-förmigen und/oder halbrunden und/oder polygonalen und/oder trapezförmigen und/oder V-förmigen Querschnitt aufweist, wonach Befestigungsmittel unterschiedlichsten Querschnitts verwendet werden können, um eine Verbindung zwischen dem Bildwandtuch und dem Rahmensystem herzustellen.

Gemäß einer Ausführungsvariante ist vorgesehen, dass zur Verbindung der horizontalen und/oder vertikalen Rahmenelemente Steckverbinder angeordnet sind, wodurch eine sehr einfache Montage des Rahmensystems ermöglicht wird.

Von Vorteil erweist sich des weiteren auch, wenn die Rahmenelemente durch Gelenke, insbesondere durch Schnappgelenke und/oder Klappgelenke und/oder Scherengelenke, miteinander verbunden werden können, wodurch die Zusammenstellung des Rahmensystems vereinfacht und sehr präzise erfolgen kann. Des weiteren erweist sich von Vorteil, dass dadurch eine optimale vertikale Stabilität des Rahmensystems erzielt wird.

Durch die Ausbildung der Gelenke besteht des weiteren die Möglichkeit das Rahmensystem transportfähig zusammenlegbar auszugestalten und auf ein minimales Transportvolumen zu beschränken.

Des weiteren besteht durch eine konsequente vertikale Falttechnik die Möglichkeit, den Aufbau auch von großen Rahmensystemen unter beengten Platzverhältnissen zu ermöglichen.

Bei Schnappgelenken erweist sich weiterhin von Vorteil, dass diese Gelenke automatisch einrasten und dadurch zudem die Stabilität erhöht werden kann.

In einer Weiterbildung des Rahmensystems erweist sich von Vorteil, dass Fußstützen und/oder Mittelstützen an zumindest einem Rahmenelement angeordnet sind, wodurch einerseits das Rahmensystem beabstandet vom Boden aufgebaut werden kann bzw. durch die Mittelstützen eine höhere Stabilität einer sehr großen Projektionswand gewährleistet ist.

Weiters erweist sich von Vorteil, dass die Fußstützen und/oder Mittelstützen höhenverstellbar sind, wodurch ein Nivellieren der Projektionswand auf die gewünschte Höhe ermöglicht wird und die optimale Höhe des Rahmensystems hergestellt werden kann und dadurch eine Projektion der Bilder in optimaler Höhe für die Zuschauer/Betrachter geboten werden kann.

Von Vorteil ist auch, dass eine Stütze, z.B. eine Teleskopstütze, zur Stabilisierung der Füße angeordnet ist, wodurch das gesamte Rahmensystem eine höhere Stabilität aufweist.

Des weiteren erweist sich als vorteilhaft, dass zwischen den Rahmenelementen, insbesondere in den Gelenken, Stabilisierungselemente zur optimalen Kraftübertragung in den Gelenken angeordnet sind, wodurch die Sicherheit des Rahmensystems erhöht wird.

Es ist weiters möglich, dass in den Ecken des Rahmensystems Steckverbinder oder Eckverriegelungen angeordnet sind, wodurch ebenfalls die Sicherheit des Rahmensystems verbessert wird.

Nach einer weiteren Ausführungsvariante ist vorgesehen, dass zumindest ein Klemmhalter zur Befestigung und Stabilisierung der Fußstützen an zumindest einem Rahmenelement angeordnet ist, wodurch die stabilisierende Wirkung der Stabilisatoren und der Eckverriegelungen ergänzt wird.

In einer zusätzlichen Ausführungsvariante ist vorgesehen, dass weitere Rahmenelemente zur Halterung von Dekorelementen, wie z.B. Stoffteilen, angeordnet sind, wodurch ein theaterähnliches Erscheinungsbild des Rahmensystems ermöglicht wird und dadurch eine bühnengerechte Darstellung erfolgen kann.

Die Befestigungsmittel des Bildwandtuches der Projektionswand können entlang der Längsachse des Profil des Rahmensystems verstellbar angeordnet sein, wodurch einerseits ein schneller und zuverlässiger Aufbau der Projektionswand und ein einfaches Spannen des Bildwandtuches ermöglicht wird.

Des weiteren erweist sich dabei von Vorteil, dass das Bildwandtuch faltenfrei gespannt werden kann.

Als vorteilhaft erweist sich, dass die Befestigungsmittel an den Querschnitt des Profils angepasst sind, weil dadurch eine optimale Verbindung des Bildwandtuches mit dem Rahmensystem hergestellt werden kann.

Von Vorteil zeigt sich dabei, dass das Befestigungsmittel einen U-, C- oder L-förmigen Querschnitt aufweist und dadurch das Rahmensystem einerseits vom Befestigungsmittel umgriffen werden kann und andererseits das Befestigungsmittel nur mit einer Seitenfläche des Rahmensystems verbunden ist.

Zum besseren Verständnis der Erfindung wird diese anhand der folgenden Figuren näher erläutert.

Es zeigen jeweils in schematisch vereinfachter Darstellung:
- Fig. 1: eine Projektionswand;
- Fig. 2a - b: eine Detailansicht des Rahmensystems;
- Fig. 3a - h: einen Querschnitt des Rahmensystems in verschiedenen Ausführungsvarianten;
- Fig. 4a - d: einen Querschnitt der Ausnehmung des Rahmensystems in verschieden Ausführungsvarianten;
- Fig. 5a - h: einen Querschnitt der Befestigungseinrichtungen des Bildwandtuches;
- Fig. 6a - b: eine Draufsicht auf ein Verbindungselement;
- Fig. 7: eine Ausführungsvariante des Befestigungsmittels;
- Fig. 8: eine Ausführungsvariante des Verbindungselementes.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Vorab sei an dieser Stelle auf die amerikanische Patentanmeldung mit der Veröffentlichungsnummer US 2003 227675 A verwiesen.

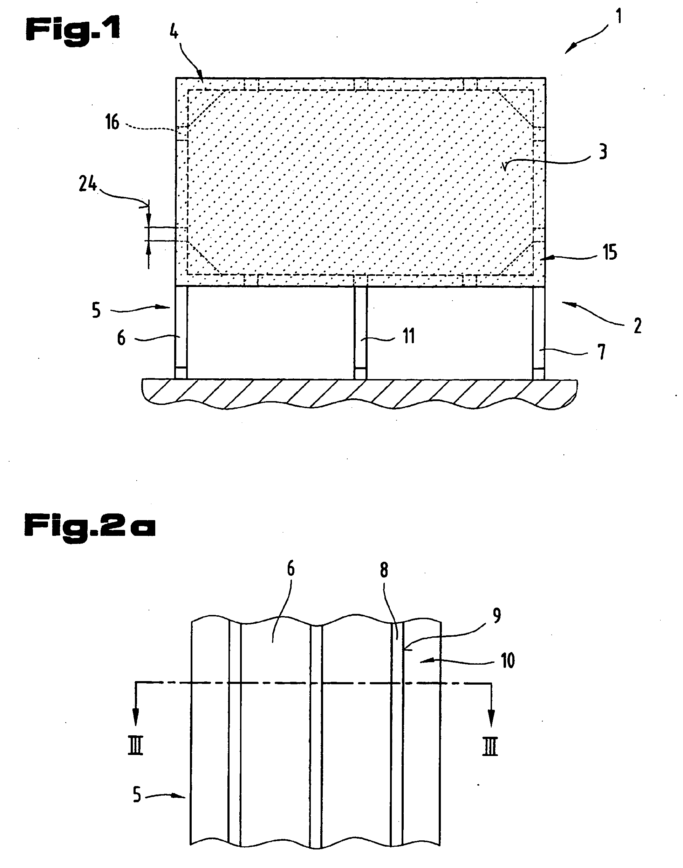

Fig. 1 zeigt eine Projektionswand 1, bestehend aus einem Rahmensystem 2 und einem Bildwandtuch 3 in schematischer Darstellung. Das Rahmensystem 2 besteht aus mehreren Rahmenelementen 4, wobei die Rahmenelemente 4 von Profilen 5 mit z.B. vier Seitenflächen 6 gebildet werden.

Weiters ist in Fig. 1 dargestellt, dass das Rahmensystem 2 durch Fußstützen 7, welche an einem horizontalen Rahmenelement 4 angeordnet sind, getragen wird.

Die Fußstützen 7 können sowohl als einfache T-Füße ausgebildet sein als auch über eine Teleskopfunktion verfügen, wodurch ein vertikales Nivellieren der Projektionswand 1 ermöglicht wird. Zur Stabilisierung der Fußstützen 7 können auch Stützen, z.B. Teleskopstützen, angeordnet sein, die mit den Fußstützen 7, z.B. eine dreieckige Form, ausbilden.

Aus Fig. 2a ist eine Detailansicht des Rahmensystems 2 ersichtlich. Es ist im Detail eine Seitenfläche 6 des Profils 5 dargestellt. In der Seitenfläche 6 des Profils 5 sind Ausnehmungen 8 vorgesehen, die von Wänden 9 der Außenseitenflächen 10 des Profils 5 gebildet werden. Die einzelnen Rahmenelemente 4 bestehen vorzugsweise aus einem hohlen Profil 5, in welches die Ausnehmungen 8 eingebracht sind. Das Profil 5 ist vorzugsweise aus Metall, vorteilhafter Weise aus Aluminium, hergestellt. Zur Erhöhung der Festigkeit kann das Profil 5 auch aus einer gehärteten Aluminiumlegierung extrudiert werden.

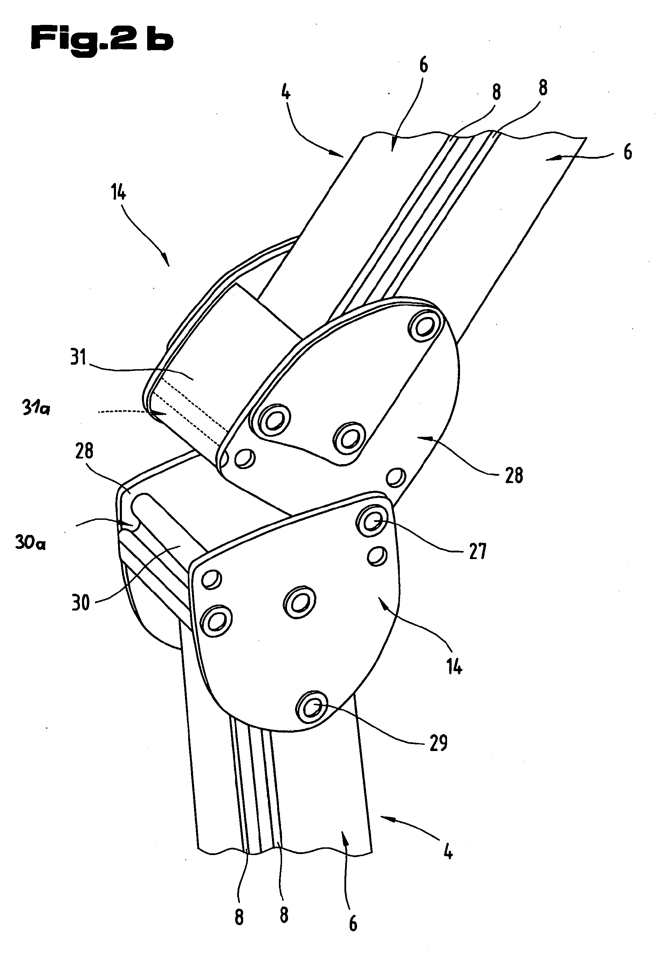

Fig. 2b zeigt die Ausführungsform eines Schnappgelenkes, wobei ein Gelenk 14 im geöffneten Zustand dargestellt ist. Das Gelenk 14 verbindet zumindest zwei Rahmenelemente 4 miteinander, welche über einen Bolzen 27 im nicht eingeschnappten Zustand des Gelenks 14 verschwenkbar miteinander verbunden sind. Die Rahmenelemente 4 sind mit dem Bolzen 27 und über seitliche Abdeckplatten 28, welche durch Befestigungselemente 29, z.B. Bolzen, Nieten,, Schrauben, an den Rahmenelementen 4 befestigt sind, verbunden. Zum Transport bzw. während der Lagerung des Rahmensystems 2 befindet sich das Gelenk 14 in geöffnetem Zustand , sodass durch das Zusammenklappen die Rahmenelemente 4, d.h. das Rahmensystem 2 insgesamt, möglichst wenig Platz benötigt. Während des Gebrauchs des Rahmensystems 2 schnappt das Gelenk 14 ein und die beiden über das Gelenk 14 verbundenen Rahmenelemente 4 sind zumindest annähernd parallel angeordnet. Gelenksteile 30, 31 greifen dazu ineinander. Das Gelenksteil 30 weist dazu eine längliche Ausnehmung 30a auf, in die ein länglicher Vorsprung 31a des Gelenksteils 31 in eingeschnappter Stellung eingreift. Gegebenenfalls kann zumindest ein Gelenksteil 30, 31 mit einer Feder ausgestattet sein, sodass die beiden Gelenksteile 30, 31 automatisch zuschnappen, wenn die Rahmenelemente 4 in einen bestimmten Winkel und ausreichend nahe zueinander gebracht werden.

Zumindest das der Aufstandsfläche der Projektionswand 1 nähere horizontale Rahmenelement 4 kann mit einer Mittelstütze 11 abgestützt werden. Die Mittelstütze 11 ist vor allem dann vorteilhaft, wenn die horizontalen Rahmenelemente 4 große Abmessungen aufweisen, wodurch deren Durchbiegung verhindert werden kann und dadurch die Spannung des Bildwandtuches 3 aufrecht bleibt.

Der Querschnitt des Profils 5 ist vorzugsweise geschlossen, wodurch z.B. vier Seitenflächen 6 gebildet werden. Die vier Seitenflächen werden durch zwei einander gegenüberliegenden Längsflächen 12 und zwei einander gegenüberliegenden Querflächen 13 gebildet.

In einer alternativen Ausführungsform kann das Profil 5 im Querschnitt auch durch andere Formen, wie z.B. ellipsenförmig oder beispielsweise dreieckig, ausgebildet sein.

Sowohl die einzelnen Rahmenelemente 4 als auch die Fußstützen 7 können als Teleskopprofil ausgebildet sein, um eine gewisse Variabilität in den Abmessungen des gesamten Rahmensystems 2 zu erzielen. Von Vorteil ist dabei auch, dass damit das Bildwandtuch 3 gespannt bzw. nachgespannt werden kann.

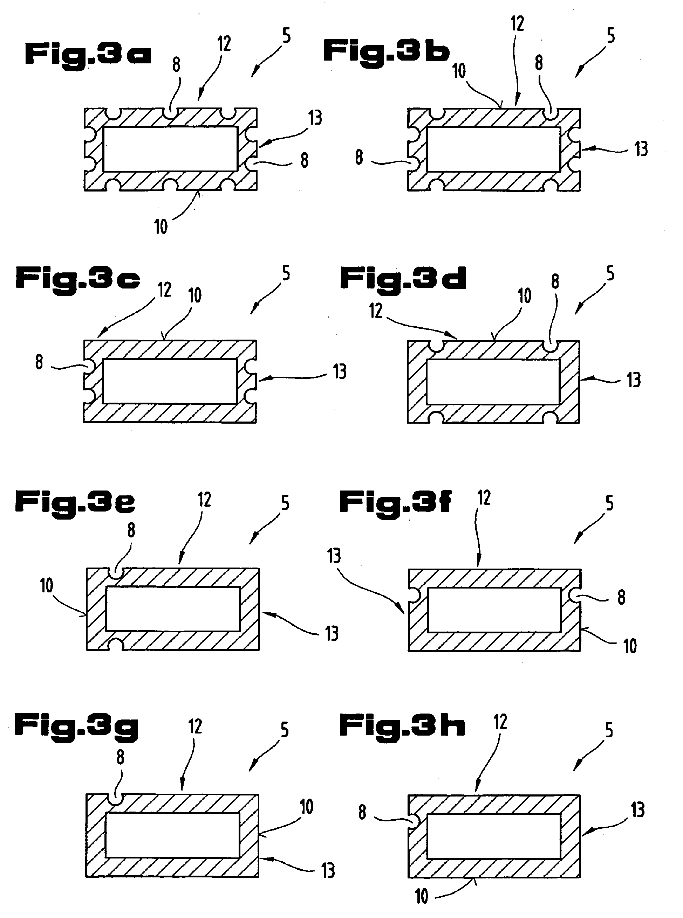

Die Ausnehmung 8 kann sowohl nur in einer der Längsseitenflächen 12 bzw. nur in einer der Querseitenflächen 13 des Profils 5 angeordnet sein, wie dies in Fig. 3g und 3h dargestellt ist. Selbstverständlich können auch mehrere Ausnehmungen 8 in einer Längs- bzw. Querseitenfläche 12, 13 angeordnet sein. In einer alternativen Ausführungsform können zwei Ausnehmungen 8 in jeweils zwei einander gegenüberliegenden Längsseitenfläche 12 bzw. zwei einander gegenüberliegenden Querseitenfläche 13 des Profils 5 angeordnet sein, wie in Fig. 3e und 3f dargestellt.

Weitere Ausführungsvarianten des Profils 5 sind in Fig. 3a bis 3d dargestellt, wobei in 3a gezeigt wird, dass die Anzahl der Ausnehmungen 8, welche beispielsweise in der Längsseitenflächen 12 angeordnet sind, sich von der Anzahl der Ausnehmungen 8 in der Querseitenfläche 13 unterscheiden können.

In Fig. 3b ist die Anzahl der Ausnehmungen 8 sowohl in der Längsseitenfläche 12 als auch an der Querseitenfläche 13 gleich.

Die Fig. 3c und 3d zeigen Ausführungsvarianten des Profils 5, bei welchen die Ausnehmungen 8 nur jeweils an den zwei einander gegenüberliegenden Querseitenfläche 13 bzw. an den zwei einander gegenüberliegenden Längsseitenfläche 12 des Profils 5 angeordnet sind.

Die Fig. 3e bis 3h zeigen weitere Ausführungsformen des Querschnitts des Rahmensystems 2, wobei die zumindest eine Ausnehmung 8 sowohl an der Längs- als auch an der Querwand des Profils 5 angeordnet sein kann.

Nach einer weiteren Ausführungsvariante des Profils 5, welche nicht dargestellt ist, ist es möglich, die Ausnehmung 8 als Durchbruch auszubilden. In diesem Fall liegt kein im Querschnitt geschlossenes Profil 5 vor. Die Ausnehmungen 8 können sowohl nur bereichsweise als auch über alle Rahmenelemente 4 verlaufend und somit durchgehend über das gesamte Rahmensystem 2 angeordnet sein.

Die Längsseitenfläche 12 des Profils 5 weist im Querschnitt betrachtet eine Abmessung auf, ausgewählt aus einem Bereich mit einer oberen Grenze von 20 cm, insbesondere 15 cm, vorzugsweise 10 cm und einer unteren Grenze von 1 cm, vorzugsweise 3 cm, insbesondere 6 cm, auf.

Die Querseitenfläche 13 des Profils 5 kann eine Breite aufweisen, ausgewählt aus einem Bereich mit einer oberen Grenze von 15 cm, insbesondere 10 cm, vorzugsweise 5 cm, und eine unteren Grenze von 1 cm, vorzugsweise 2 cm, insbesondere 3 cm. betragen. Als vorteilhaft erweist sich ein im Querschnitt quadratisches Profil 5 mit den Längs- und Querabmessungen von jeweils 32 mm bzw. ein im Querschnitt rechteckiges Profil 5 mit Abmessungen von 64 mmx32mm.

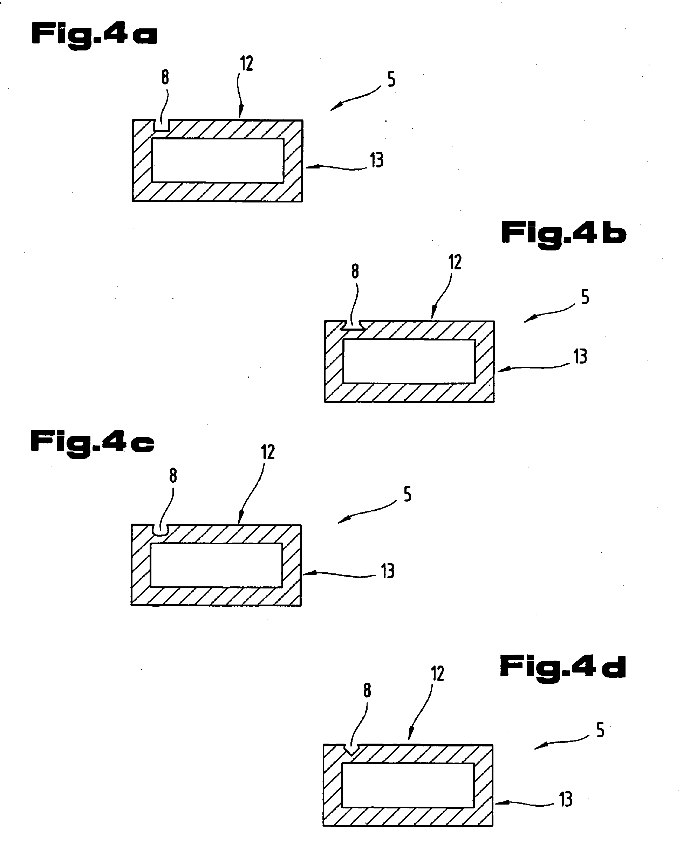

Die Fig. 4a bis 4d zeigen unterschiedliche Querschnittsformen der Ausnehmungen 8. Wie in Fig. 4a dargestellt, kann der Querschnitt der Ausnehmung8 viereckförmig sein. Ebenso denkbar ist ein sechseckförmiger Querschnitt. Wie aus 4b ersichtlich ist, kann die Ausnehmung 8 auch trapezförmig ausgebildet sein. Fig. 4c zeigt eine U-förmige Ausnehmung 8 und in Fig. 4d ist eine V-förmige Ausnehmung 8 dargestellt. Der Querschnitt der Ausnehmungen 8 der Fig. 3a bis 3h ist zumindest annähernd halbkreisförmig ausgebildet.

Zusammenfassend soll damit verdeutlicht werden, dass der auf dem Gebiet der Erfindung tätige Durchschnittsfachmann den Querschnitt der Ausnehmung 8 aufgrund der gegenständlichen Lehre zum technischen Handeln an die jeweiligen Erfordernisse anpassen wird.

Als vorteilhaft hat sich auch erwiesen, wenn der Querschnitt der Ausnehmung 8 annähernd schwalbenschwanzförmig ausgebildet ist mit einer größeren Breite am Grund der Ausnehmung 8 im Vergleich zur Breite an der Oberfläche der jeweiligen Seitenwand.

Die einzelnen Rahmenelemente 4 können durch Gelenke 14, beispielsweise durch Schnappgelenke oder Klappgelenke oder Scherengelenke, miteinander verbunden sein, wodurch eine Faltbarkeit und dadurch eine große Flexibilität des Rahmensystems 2 erzielt wird. Durch ein Zusammendrücken von in den Ecken des Rahmensystems 2 innenliegenden Scherengelenken kann diesen zusätzlich Stabilität verliehen werden (in Fig. 1 strichpunktiert angedeutet).Die einzelnen Rahmenelemente 4 müssen nicht notwendigerweise durch Gelenke 14 verbunden werden, sondern können beispielsweise auch durch ein Ineinanderstecken bzw. durch Steckverbindungen, insbesondere Steckschuhverbindungen, miteinander verbunden werden. Somit können also die Rahmenelemente 4 sowohl einzeln vorliegen, als auch über Gelenke 14 miteinander verbunden sein Das Rahmensystem 2 kann auch einteilig ausgebildet sein, insbesondere über Gelenke 14, In oder an den einzelnen Rahmenelementen 4 können auch stabilitätserhöhende Elemente angeordnet sein, die für eine optimale Kraftübertragung in den Gelenken 14 bzw. eine Kraftableitung sorgen.

Zusätzlich oder alternativ dazu können noch Eckverriegelungen in den Eckgelenken, z.B. als Scheregelenke ausgebildet sein können, angeordnet sein, um großformatigen Projektionswänden 1 eine größere Stabilität zu verleihen.

Auch die Fußstützen 7 bzw. die Mittelstütze 11 können mit den einzelnen Rahmenelementen 4 über Gelenke 14, z.B. Scherengelenke, oder durch Steckverbindungen miteinander verbunden werden. In einer alternativen Ausführungsform dazu kann zur Stabilisierung der Fußstützen 7 an einem oder mehreren der Rahmenelemente 4 auch ein Klemmhalter angeordnet sein.

Neben dem bzw. den vertikalen Rahmenelement(en) 4, welche(s) zur Befestigung des Bildwandtuches 3 dient, können noch weitere vertikale und horizontale Rahmenelemente 4 angeordnet sein, welche beispielsweise zur Halterung von Dekorelementen, wie z.B. Stoff, dienen um der Projektionswand 1 ein bühnenähnliches Aussehen zu verleihen. Selbstverständlich ist es zur Erhöhung der Stabilität auch möglich, zwischen den jeweils äußeren Rahmenelemente 4 noch zumindest ein weiteres Rahmenelement 4 anzuordnen.

Das Bildwandtuch 3 zur reflektierenden Wiedergabe von projizierten Bildern besteht aus einem reflektierenden bzw. transluzierenden flexiblen Material mit Endbereichen 15 (Fig. 1) an den Längs- und Querseiten In diesen Endbereichen 15 sind erfindungsgemäße Befestigungsmittel 16 (Fig. 1) zur Halterung des Bildwandtuches 3 am Rahmensystem 2 angeordnet.

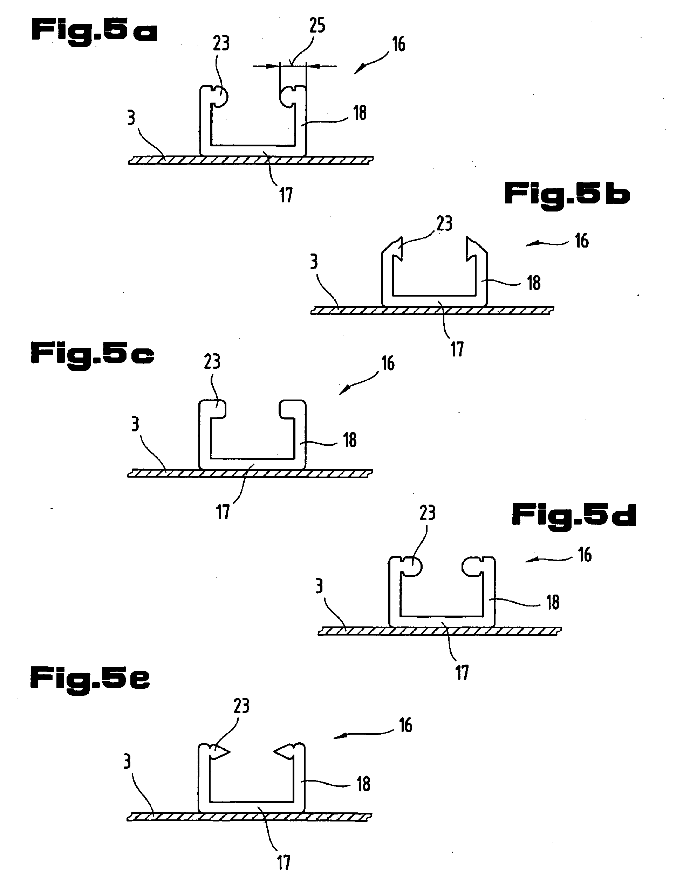

Das Befestigungsmittel 16 kann als clipförmiges Profilelement mit einem C- oder U-förmigen Querschnitt ausgebildet sein. Ein derartiger Clip kann aus einer Basis 17 und zwei davon abstehenden, einander gegenüberliegenden Schenkel 18, die über die Basis 17 miteinander verbunden sind, bestehen (z.B. Fig. 5a).

Das Befestigungsmittel 16 kann aus einem elastisch verformbaren Werkstoff, wie z.B. einem Elastomer, Kunststoff, Textilstoffe, Verbundstoffe, etc. bestehen und ist gemäß den Ausführungsformen nach Fig. 5a bis 5h an den Querschnitt des Profils 5 des Rahmensystems 2 angepasst.

Ebenso kann das Befestigungsmittel 16 federnd ausgebildet sein, wobei die Federelastizität der Schenkel 18 in Bezug auf die Basis 17 so groß sein sollte, das es beim Aufschieben auf das Profil 5 des Rahmenelements 4 das Einschnappen von entsprechenden Fortsätzen auf dem Befestigungsmittel in die Ausnehmung 8 des Profils 5 ermöglicht.

Das Befestigungsmittel 16 ist mit dem Bildwandtuch 3 durch Verkleben, Verschrauben, Anformen, Anklammern, Klemmen, Schweißen, z.B. Ultraschallschweißen, etc., verbunden.

Die Befestigungsmittel 16 sind durchgehend über die gesamte Längs- und/oder Querseite des Bildwandtuches 3 angeordnet sein. In der erfindungsgemäßen Ausführungsform befinden sich die Befestigungsmittel 16 in gleichmäßigen Abständen über die gesamte Längs- und Querseite 12, 13 des Bildwandtuches 3 verteilt. Letztgenannte Ausführung ist vorteilhaft, weil dadurch ein gleichmäßiges Spannen des Bildwandtuches 3 erfolgen kann.

Im Endbereich 15 des Bildwandtuches 3, kann eine Verstärkung bzw. eine Verstärkungslage angeordnet sein, mit einer Breite von beispielsweise zumindest der Breite des Profils 5, auf welcher bzw. zwischen welchen die Befestigungsmittel 16 montiert sind, um ein eventuelles Ausreißen der Befestigungsmittel 16 zu verhindern.

Wie bereits angesprochen, können an den Schenkeln 18 des beispielsweise mit C-förmigen Querschnitt ausgebildeten Befestigungsmittels 16 in den von der Basis abgewandten Endbereichen Fortsätze 23 derart angeformt bzw. ausgebildet sein, dass diese Fortsätze 23 aufeinander zuweisen, wie dies in den Fig. 5a bis 5h dargestellt ist. Diese Fortsätze, die z.B. durch die Zunahme einer Dicke 25 des Querschnittes der Schenkel 18 entstehen, können beispielsweise halbkreisförmig (Fig. 5a), trapezförmig (Fig. 5b), viereckig (Fig. 5c), sechseckig, polygonal, U-förmig (Fig. 5d), dreieckig (Fig. 5a) ausgebildet sein. Insbesondere erweist es sich als vorteilhaft, wenn der Querschnitt dieser Fortsätze 23 an den Querschnitt der Ausnehmungen 8 der Profile 5 der Rahmenelemente 4 angepasst ist.

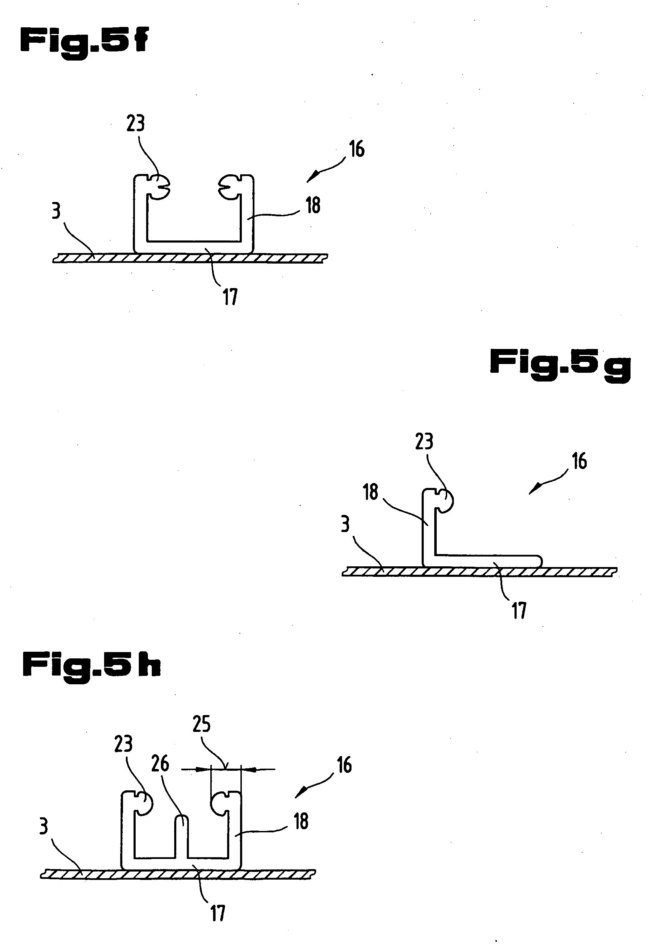

Ebenso ist es möglich, wie dies in Fig. 5f dargestellt ist, dass insbesondere um diesen Fortsätzen eine gewisse Federelastizität zu verleihen, diese ebenfalls zumindest bereichsweise eine Ausnehmung aufweisen, sodass diese Fortsätze in einem vorderen Bereich beim Aufschieben auf die Profile 5 der Rahmenelemente 4 und beim Einclipsen in die Ausnehmungen 8 derselben zusammengedrückt werden können, sodass also dieses Aufschieben erleichtert wird. Nach dem Einführen dieser zweigeteilten Fortsätze 23 in die entsprechende Ausnehmung 8 weitet sich die Ausnehmung der Fortsätze aufgrund der Elastizität wieder aus und ist damit ein sicherer Halt des Befestigungsmittels 16 in der Ausnehmung 8 der Rahmenelemente gegeben.

Die in Fig. 5f dargestellte zweigeteilte Form des Endes 23 des der Schenkel 18 ist nicht auf die in Fig. 5f dargestellte Form beschränkt und kann selbstverständlich auch Ausbildungen wie in den Fig. 5a bis 5e beschrieben annehmen.

Wie die Fig. 5f weiters zeigt, können zwischen dem Schenkel 18 und den Fortsätzen 23 Nuten ausgebildet sein, womit nach dem Einclipsen des Befestigungsmittels 16 in die Ausnehmung 8 der Rahmenelemente 4 eine Führung in dieser Ausnehmung ermöglicht wird.

Fig. 5g zeigt alternativ zu den soeben beschriebenen Ausführungsformen ein Befestigungsmittel 16 mit L-förmigen Profil. Die Enden des Schenkels 18 können Ausbildungen, wie in Fig. 5a bis 5f beschrieben, annehmen. Diese L-förmige Befestigungsmittel 16 wird im Wesentlichen durch die Weglassung des zweiten Schenkels 18 aus der C-förmigen Ausführungsform gebildet.

Die Zunahme der Abmessungen in den Enden der Schenkel 18 ergeben vorteilhafterweise eine korrespondierende Form zu den Ausnehmungen 8 der Rahmenelemente 4. Die Ausnehmungen 8 der Rahmenelemente 4 können verengte Öffnungen aufweisen, um ein Herausgleiten des zumindest einen Endes des zumindest einen Schenkels 18 des Befestigungselementes 16 zu verhindern.

Bei einem U-förmigen Profilelement können die Enden der Schenkel 18 der Befestigungsmittel 16 die gleichen korrespondierenden Formen zu den Ausnehmungen 8 der Rahmenelemente 4 annehmen, wie in den Fig. 5a bis 5f dargestellt.

In einer weiteren Ausführungsvariante, schematisch in Fig. 5h dargestellt, kann zumindest ein Steg 26 in gleicher Richtung der Schenkel 18 angeordnet sein, der als einfacher Steg 26, wie abgebildet, ausgeführt ist. Alternativ kann der Steg 26 am Ende auch dermaßen ausgebildet sein, dass dieses die gleiche Form wie jene an den beiden Schenkel 18 des Befestigungsmittels 16 annimmt.

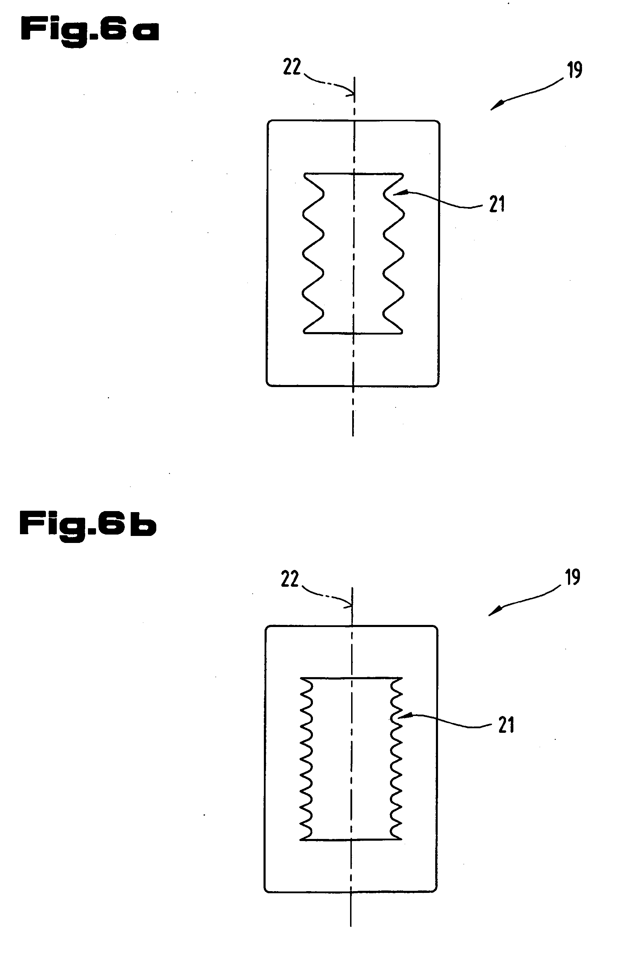

Die Befestigungsmittel 16 können auch über ein Verbindungselement 19, welches in zwei unterschiedlichen Ausführungsformen in Fig. 6a und 6b dargestellt ist, mit dem Bildwandtuch 3 verbunden sein. Das Verbindungselement 19 kann beispielsweise in einer rechteckigen Form ausgeführt sein, wobei sich in der Mitte ein Durchbruch befindet, welcher in regelmäßigen Abständen Verjüngungen 21, beispielsweise in Art einer Zahnung, aufweist. Die Befestigungsmittel 16 können entlang einer Längsachse 22 des Verbindungselements 19 auf dem Bildwandtuch 3 verstellbar angeordnet sein, wobei die Befestigungsmittel 16 in den Verjüngungen 21 des Durchbruchs des Verbindungselements 19 einrasten. Das Verbindungselement 19 kann über unterschiedliche Verbindungsmöglichkeiten, wie z.B. Verkleben, Verschrauben, Klammern, Klemmen, Schweißen, z.B. Ultraschallschweißen, etc., mit dem Bildwandtuch 3 verbunden werden.

Die Schenkel 18 können an ihren der Basis 17 abgewandten Enden 23 eine Zu- oder Abnahme der Abmessungen sowohl der Breite 24 als auch eine Zunahme der Dicke 25 aufweisen.

Die Befestigungsmittel 16 können sowohl im Endbereich 15 des Bildwandtuches 3, wie in Fig. 5a bis 5h dargestellt, als auch im U-förmigen Umschlagsbereich des Bildwandtuches 3, zwischen den beiden Schenkeln des U-förmigen Umschlages oder auch endständig am Bildwandtuch 3, angeordnet sein.

Über die Befestigungsmittel 16 ist das Bildwandtuch 3 entlang der Längsachse des Profils 5 des Rahmensystems 2 verstellbar angeordnet und das Bildwandtuch 3 kann dadurch nachgespannt werden. Das Bildwandtuch 3 kann daher an beliebigen Punkten über die Befestigungsmittel 16 mit dem Rahmensystem 2 verbunden werden. Die verschiebbaren Befestigungsmittel 16 können über die einzelnen Rahmenelemente 4 und Bedarfsweise auch über die Gelenke bewegt werden und gegebenenfalls an den Ecken des Rahmensystems 2 abgezogen werden. Durch eine derartig flexible Anordnung des Bildwandtuches 3 am Rahmensystem 2, im Vergleich zu herkömmlichen Systemen, kann die Projektionswand 1 hergestellt werden.

Das Bildwandtuch 3 kann in den Endbereichen 15 noch eine Verkleidung aufweisen um beispielsweise die Befestigungsmittel 16, die durch das Bildwandtuch 3 durchgedrückt werden bzw. deren Befestigung am Bildwandtuch 3, abzudecken.

In einer alternativen Anwendung, die nicht Gegenstand dieser Erfindung ist, können die Befestigungsmittel 16 auch an einer Abdeckung für Boote, Transporter, LKWs, Gartenmöbel, montiert sein, die mit an diesen Gegenständen befindlichen Profilen 5 bzw. mit diese Gegenstände umgebenden Profilen 5 korrespondieren.

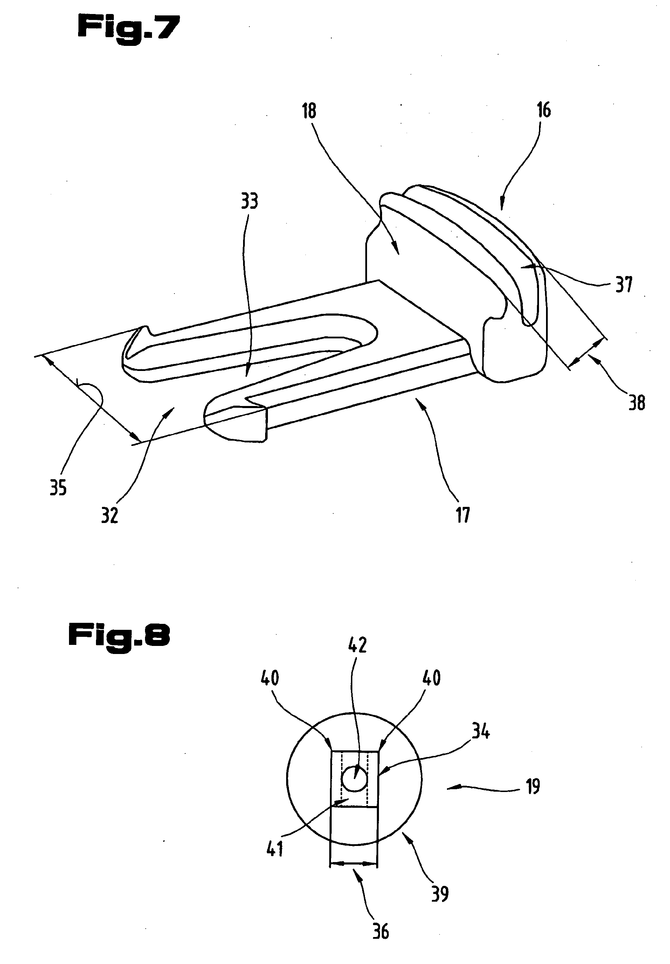

Die Fig. 7 und 8 zeigen eine weitere Ausführungsvariante des Befestigungsmittels 16 (Fig. 7) bzw. des Verbindungselementes 19 (Fig. 8).

Das Befestigungsmittel 16 nach Fig. 7 ist zumindest annähernd L-förmig im Querschnitt betrachtet ausgebildet mit der Basis 17 sowie dem Schenkel 18. Die Basis 17 weist dabei, ausgehend von einem Randbereich 32, eine Ausnehmung 33 auf, die sich in Richtung auf den Schenkel 18 erstreckt. Diese Ausnehmung 33 ist beim Ausführungsbeispiel nach Fig. 7 als Durchbruch ausgebildet. Es wird damit möglich, die Basis 17 zumindest im Randbereichen 32 zusammenzudrücken, sodass also zumindest dieser Randbereich 32 federelastisch ausgebildet ist. Durch diese Federelastizität wird die Einführung des Befestigungsmittels 16, d.h. der Basis 17, in ein entsprechendes Rastelement 34 nach Fig. 8 ermöglicht. Um dabei zusätzlich zu der aufgrund der Aufspreizung der Basis, d.h. der beiden zapfenförmigen Endbereiche 32 der Basis und der Wandung des Rastelementes 34, sich ausbildende Reibungskraft zur Unterstützung eine festere Verbindung bzw. Halterung des Befestigungsmittels 16 in dem Rastelement 34 zu erreichen, können alternativ dazu die beiden Randbereiche 32 der Basis 17 des Befestigungsmittels 16, welche aufgrund des Durchbruches entstehen, zumindest annähernd hakenförmig ausgebildet sein, wobei diese Haken derart bemessen sind, dass eine Breite 35 jeweils von Außenkante zu Außenkante zwischen den Haken der Basis 17, größer ist als eine Breite 36 des Rastelementes 34, sodass also diese beiden hakenförmigen Randbereiche 32 das Rastelement 36 außen nach dem Einschieben des Befestigungsmittels 17 in das Rastelement 34 umschließen bzw. an diesem anliegt.

Der Schenkel 18 des Befestigungsmittels 16 weist bei der Ausführungsform nach Fig. 7 ebenfalls eine Ausnehmung 37 auf. Diese Ausnehmung 37 dient ebenfalls zur Herstellung einer gewissen Federelastizität des Schenkels 18 zumindest im von der Basis abgewandten Endbereich des Schenkels 18. Der Schenkel 18 ist nämlich dazu vorgesehen, in die Ausnehmung 8 der jeweiligen Rahmenelemente 4 eingeführt zu werden und in dieser Ausnehmung 8 verschiebbar gehaltert zu werden. Um dabei einen sicheren Halt zu ermöglichen, weist der Schenkel 18 eine Breite 38 auf, die größer ist als eine entsprechende Breite der Ausnehmung 8 des Rahmenelementes 4. Durch die Federelastizität wird es in der Folge möglich, den Randbereich des Schenkels 18 so weit zusammenzudrücken, dass das Einführen des Befestigungsmittels 16 in die Ausnehmung 8 des Rahmenelementes möglichst wenig Kraftaufwand erfordert und in der Folge nach dem Einführen aufgrund der Aufspreizung, d.h. der Rückstellung, aufgrund der Federelastizität ein sicherer Halt in der Ausnehmung 8 gegeben ist.

Die Führung des Schenkels 18 in der Ausnehmung 8 des Rahmenelementes 4 kann insofern noch unterstützt werden, wenn in einer weiteren Ausführungsvariante hierzu dieser Schenkel 18 in einem Bereich unterhalb des Randbereiches, in dem die Ausnehmung 37 angeordnet ist, zumindest eine Hinterschneidung aufweist, beispielsweise nutförmig ausgebildet ist, wobei eine Breite dieser Nut zumindest in etwa angepasst ist an eine Wandstärke des Rahmenelementes 4.

Die Ausführungsvariante nach Fig. 7 des Befestigungselementes 16 ist somit im Prinzip einerseits clipartig im Schenkel 18 und andererseits ebenfalls clipartig in der Basis 17 ausgeführt.

Die Fig. 8 wiederum zeigt ein Verbindungselement 19, welches zusammen mit dem Befestigungsmittel 16 nach Fig. 7 verwendet werden kann. Dieses Verbindungselement 19 weist eine Grundplatte 39 auf. Diese Grundplatte 39 ist vorzugsweise aus einem schweißbaren Kunststoff gebildet, da in einer bevorzugten Ausführungsvariante diese Grundplatte mit dem Material des Bildwandtuches 3 verschweißt wird um damit einen besseren Halt, z.B. im Vergleich zu herkömmlichen Druckknopfsystemen, zu erhalten. Die Befestigung erfolgt dabei vorzugsweise in den Randbereichen des Bildwandtuches 3, wobei, wie bereits erwähnt, diese Randbereiche zur Erhöhung der Ausreißfestigkeit verstärkt, beispielsweise durch Umschlagen des Bildwandtuches 3 oder durch Aufdoppelung, sein können.

Auf dieser Grundplatte 39, die beispielsweise kreisförmig, ellipsenförmig, viereckig, etc., sein kann, ist ein besagtes Rastelement 34 angeordnet. Dieses Rastelement 34 ist zumindest annähernd U-förmig bzw. bügelförmig ausgebildet, und über zumindest zwei Stege 40 mit der Grundplatte 39 verbunden.

Es ist selbstverständlich auch möglich, dass dieses Rastelement 34 aus dem Kunststoff der Grundplatte 39 gebildet ist und somit das Verbindungselement 19 also einstückig ausgebildet ist.

Das Rastelement 34 ist derart auf der Grundplatte 39 angeordnet, dass zwischen der Grundplatte 39 und dem Rastelement 34 ein Abstand ausgebildet wird, sodass das Einschieben der Basis 17 des Verbindungselementes 16 nach Fig. 7 in die entstehende Ausnehmung ermöglicht wird.

In einer alternativen Ausführungsvariante, die nicht Gegenstand dieser Erfindung ist, ist es möglich, auf das Verbindungsmittel 16 nach Fig. 7 zu verzichten und in einer Basis 41 des Rastelementes 34 eine bevorzugt kreisrunde Ausnehmung 42 anzuordnen. In diese Ausnehmung 42 kann in der Folge ein herkömmlicher Druckknopf eingesetzt werden, beispielsweise mit dem Rastelement 34 verpresst werden bzw. mit diesem verklebt werden. Dazu ist der Durchmesser der Ausnehmung 42 des Rastelementes 34 an den Durchmesser des jeweils verwendeten Druckknopfteils angepasst, sodass zwischen diesen beiden Elementen ein Reibschluss entsteht und ein sicherer Halt gewährleistet ist.

Durch diese Ausführungsvariante wird es nicht nur möglich, das erfindungsgemäße Bildbandtuch auch auf herkömmlichen Rahmensystemen 2, welche mit Druckknöpfen versehen sind, zu verwenden, sondern wird damit auch der Vorteil erreicht, dass im Vergleich zu herkömmlichen Druckknopfsystemen, aufgrund der Verschweißung der Grundplatte 39 mit dem Material des Bildwandtuches 3 ein festerer Halt gegeben ist und somit die Ausreißfestigkeit im Vergleich zu herkömmlichen Druckknopfsystemen gesteigert werden kann.

Die Ausführungsbeispiele zeigen mögliche Ausführungsvarianten des Bildwandtuches, Rahmensystems 2 und der Projektionswand 1, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, vom Schutzumfang mitumfasst, sofern diese unter die Definition der Ansprüche fallen.

Der Ordnung halber sei abschließend darauf hingewiesen, dass zum besseren Verständnis des Aufbaus des Bildwandtuches 3, Rahmensystems 2 und der Projektionswand 1 diese bzw. deren Bestandteile teilweise unmaßstäblich und/oder vergrößert und/oder verkleinert dargestellt wurden.

### Bezugszeichenaufstellung

- 1: Projektionswand
- 2: Rahmensystem
- 3: Bildwandtuch
- 4: Rahmenelement
- 5: Profil

- 6: Seitenfläche
- 7: Fußstütze
- 8: Ausnehmung
- 9: Wand
- 10: Außenseitenfläche

- 11: Mittelstütze
- 12: Längsseitenfläche
- 13: Querseitenfläche
- 14: Gelenk
- 15: Endbereich

- 16: Befestigungsmittel
- 17: Basis
- 18: Schenkel
- 19: Verbindungselement

- 21: Verjüngung
- 22: Längsachse
- 23: Fortsatz
- 24: Breite
- 25: Dicke

- 26: Steg
- 27: Bolzen
- 28: Abdeckplatte
- 29: Befestigungselement
- 30: Gelenksteil

- 31: Gelenksteil
- 32: Randbereich
- 33: Ausnehmung
- 34: Rastelement
- 35: Breite

- 36: Breite
- 37: Ausnehmung
- 38: Breite
- 39: Grundplatte
- 40: Steg

- 41: Basis
- 42: Ausnehmung

## Patentansprüche

1. Bildwandtuch (3) aus einem reflektierenden bzw. transluzierenden, flexiblen Material zur Wiedergabe von projizierten Bildern, mit einer Fläche mit Endbereichen (15) an den Längs-und Querseiten (12, 13) der Fläche in denen Befestigungsmittel (16) mit einer Basis (17) zur Halterung des Bildwandtuches (3) an einem oder mehreren Rahmenelementen (4) eines Rahmensystems (2) angeordnet und mit dem Bildwandtuch (3) verbunden sind, wobei die Befestigungsmittel (16) in gleichmäßigen Abständen über die gesamte Längs- und Querseite (12, 13) des Bildwandtuches (3) verteilt angeordnet sind, **dadurch gekennzeichnet, dass** an der Basis (17) der Befestigungsmittel (16) zwei einander gegenüberliegende Schenkel (18), die über die Basis (17) miteinander verbunden sind, ausgebildet sind, sodass das Befestigungsmittel (16) einen C- oder U-förmigen Querschnitt aufweist, oder dass an der Basis (17) zur Ausbildung eines L-förmigen Querschnitts ein davon abstehender Schenkel (18) angeordnet ist, dass weiters ein von der Basis (17) abgewandter Endbereich der Schenkel (18) oder des Schenkels (18) und/oder die Basis (17) zumindest annähernd clipartig ausgebildet sind oder ist, zum Einclipsen der Befestigungsmittel (16) in Ausnehmungen (8) der Rahmenelemente (4), und dass die Befestigungsmittel (16) mit der Basis auf dem Bildwandtuch (3) befestigt sind oder dass zwischen dem Befestigungsmittel (16) und dem Bildwandtuch (3) ein Verbindungselement (19) angeordnet ist, wobei das Verbindungselement (19) eine Grundplatte zur großflächigen Verbindung des Verbindungselements mit dem Bildwandtuch umfasst, auf der ein Rastelement (34) zum Einrasten der Basis des Befestigungsmittels (16) angeordnet ist.

2. Bildwandtuch (3) nach Anspruch 1, **dadurch gekennzeichnet, dass** das Befestigungsmittel (16) federelastisch ausgebildet ist.

3. Bildwandtuch (3) nach einem der Ansprüche 1 oder 2, **dadurch gekennzeichnet, dass** am Befestigungsmittel (16) zwischen den beiden Schenkeln (18) zumindest ein Steg (26) in gleicher Richtung der Schenkel (18) angeordnet ist.

4. Bildwandtuch (3) nach einem der Ansprüche 1 bis 3, **dadurch gekennzeichnet, dass** die Verbindung zumindest eines Teils des Befestigungsmittels (16) mit dem Bildwandtuch (3) durch Verschrauben, Verkleben, Klammern, Klemmen, Schweißen, z.B. Ultraschallschweißen, hergestellt ist.

5. Bildwandtuch (3) nach einem der Ansprüche 1 bis 4, **dadurch gekennzeichnet, dass** die Befestigungsmittel (16) auf dem Bildwandtuch (3) entlang ihrer Längserstreckung über das Verbindungselement (19) verstellbar angeordnet sind.

6. Bildwandtuch (3) nach einem der Ansprüche 1 bis 5, **dadurch gekennzeichnet, dass** im Bereich der Befestigungsmittel (16) und/oder in den Endbereichen (15) eine Verstärkung der Fläche ausgebildet ist, z.B. durch Umschlagen des Bildwandtuches in den Endbereichen.

7. Bildwandtuch (3) nach einem der Ansprüche 1 bis 6, **dadurch gekennzeichnet, dass** die Grundplatte des Verbindungselements (19) scheibenförmig ist.

8. Bildwandtuch (3) nach Anspruch 7, **dadurch gekennzeichnet, dass** das Rastelement (34) im Querschnitt betrachtet zumindest annähernd u-förmig mit einer, insbesondere zumindest annähernd parallel zur Grundplatte (39) orientierten, Basis (41) und zwei daran angeordneten Stegen (40) gebildet ist, wobei die Stege (40) mit der Grundplatte (39) derart verbunden sind, dass zwischen der Grundplatte (39) und der Basis (41) eine Ausnehmung für das Befestigungsmittel (16) entsteht.

9. Bildwandtuch (3) nach Anspruch 7 oder 8, **dadurch gekennzeichnet, dass** die Grundplatte (39) aus einem schweißbaren Kunststoff besteht.

10. Bildwandtuch (3) nach Anspruch 8 oder 9, **dadurch gekennzeichnet, dass** in der Basis (41) des Rastelementes (34) eine Ausnehmung (42) zur Aufnahme eines alternativen Befestigungsmittels (16), insbesondere zur Aufnahme eines Druckknopfes, angeordnet ist.

11. Bildwandtuch (3) nach einem der Ansprüche 1 bis 10, **dadurch gekennzeichnet, dass** die Basis (17) des Befestigungsmittels (16) eine sich von einem dem Schenkel (18) gegenüberliegenden Randbereich sich in Richtung auf den Schenkel (18) sich erstreckende Ausnehmung (33) aufweist.

12. Bildwandtuch (3) nach Anspruch 11, **dadurch gekennzeichnet, dass** die neben der Ausnehmung (33) in der Basis verbleibenden Randbereiche der Basis (17) des Befestigungsmittels (16) zumindest annähernd hakenförmig ausgebildet sind.

13. Bildwandtuch (3) nach einem der Ansprüche 1 bis 12, **dadurch gekennzeichnet, dass** in einem von der Basis (17) des Befestigungsmittels (16) abgewandten Endbereich des Schenkels (18) über dessen gesamte Länge eine Ausnehmung (37) angeordnet ist und die beiden dadurch entstehenden Teilendbereiche gegebenenfalls zumindest annähernd hakenförmig ausgebildet sind.

14. Projektionswand (1) zur Wiedergabe von projizierten Bildern mit einem Bildwandtuch (3) aus einem reflektierenden bzw. transluszierenden, flexiblen Material und mit einem das Bildwandtuch (3) aufnehmenden Rahmensystem (2) bestehend aus mehreren Rahmenelementen (4), wobei diese von einem Profil (5) mit Seitenflächen (6) mit einer Innen- und einer Außenwand gebildet werden, die entlang ihrer Längsrichtung zumindest eine Ausnehmung (8) aufweisen, die von der Außenwand der Seitenflächen (6) des Profils (5) begrenzt sind und sich vorzugsweise ein Querschnitt der Ausnehmung (8) in Richtung auf einen Ausnehmungsgrund erweitert, wobei die zumindest eine Ausnehmung (8) zur Aufnahme von an dem Bildwandtuch (3) angeordneten Befestigungsmittels (16) ausgebildet ist, **dadurch gekennzeichnet, dass** das Bildwandtuch (3) nach zumindest einem der Ansprüche 1 bis 15 ausgebildet ist, wobei die Befestigungsmittel (16) in der Ausnehmung (8) entlang der Längsachse (22) des Profils (5) verschiebbar angeordnet sind.

15. Projektionswand (1) nach Anspruch 14, **dadurch gekennzeichnet, dass** in zumindest einer Seitenflächen (6) des Profils (5) mehrere Ausnehmungen (8) angeordnet sind.

16. Projektionswand (1) nach Anspruch 14, **dadurch gekennzeichnet, dass** die Ausnehmungen (8) in einander gegenüberliegenden Seitenflächen (6) des Profils (5) angeordnet sind.

17. Projektionswand (1) nach einem der Ansprüche 14 bis 16, **dadurch gekennzeichnet, dass** die Ausnehmung (8) einen U-förmigen oder halbrunden oder polygonalen oder trapezförmigen oder V-förmigen Querschnitt aufweist.

18. Projektionswand (1) nach Anspruch 14 bis 17, **dadurch gekennzeichnet, dass** die Befestigungsmittel (16) an den Querschnitt des Profils (5) angepasst sind.

## Claims

1. Projection screen (3) made from a reflecting or light-transmitting flexible material for reproducing projected images, with a surface with end regions (15) at the longitudinal and transverse sides (12, 13) of the surface in which fixing means (16) with a base (17) for holding the projection screen (3) on one or more frame elements (4) of a frame system (2) are provided and connected to the projection screen (3), and the fixing means (16) are distributed at equal distances across the entire longitudinal and transverse sides (12, 13) of the projection screen, **characterised in that** two oppositely lying arms (18) are provided on the base (17) of the fixing means (16) which are connected to one another via the base (17) so that the fixing means (16) has a C-shaped or U-shaped cross-section, or an arm (18) is provided on the base (17) extending out from it in order to impart an L-shaped cross-section, and an end region of the arms (18) or arm (18) remote from the base (17) and/or the base (17) are or is additionally of an at least approximately clip-type design in order to clip the fixing means (16) into recesses (8) of the frame elements (4), and the fixing means (16) are affixed to the projection screen (3) by the base or a connecting element (19) is disposed between the fixing means (16) and the projection screen (3), and to establish a connection of the connecting element to the projection screen over a large surface area, the connecting element (19) comprises a base plate, on which a catch element (34) is disposed for latching the base of the fixing means (16).

2. Projection screen (3) as claimed in claim 1, **characterised in that** the fixing means (16) is resiliently elastic.

3. Projection screen (3) as claimed in one of claims 1 or 2, **characterised in that** at least one web (26) is disposed between the two arms (18) on the fixing means (16) in the same direction as the arms (18).

4. Projection screen (3) as claimed in one of claims 1 to 3, **characterised in that** at least a part of the fixing means (16) is connected to the projection screen (3) by screwing, gluing, stapling, clamping, welding, e.g. ultra-sound welding.

5. Projection screen (3) as claimed in one of claims 1 to 4, **characterised in that** the fixing means (16) are disposed on the projection screen (3) so that they can be displaced along its longitudinal extension by means of the connecting element (19).

6. Projection screen (3) as claimed in one of claims 1 to 5, **characterised in that** the surface is reinforced in the region of the fixing means (16) and/or in the end regions (15), e.g. by folds in the end regions of the projection screen.

7. Projection screen (3) as claimed in one of claims 1 to 6, **characterised in that** the base plate of the connecting element (19) is wafer-shaped.

8. Projection screen (3) as claimed in claim 7, **characterised in that** the catch element (34) is at least approximately U-shaped as viewed in cross-section, with a base (41) which is specifically oriented at least approximately parallel with the base plate (39) and has two webs (40) disposed thereon, and the webs (40) are connected to the base plate (39) in such a way that a recess for the fixing means (16) is created between the base plate (39) and the base (41).

9. Projection screen (3) as claimed in claim 7 or 8, **characterised in that** the base plate (39) is made from a weldable plastic.

10. Projection screen (3) as claimed in claim 8 or 9, **characterised in that** a recess (42) is provided in the base (41) of the catch element (34) for accommodating an alternative fixing means (16), in particular for accommodating a push-button.

11. Projection screen (3) as claimed in one of claims 1 to 10, **characterised in that** the base (17) of the fixing means (16) has a recess (33) extending in the direction towards the arm (18) from a peripheral region lying opposite the arm (18).

12. Projection screen (3) as claimed in claim 11, **characterised in that** the remaining peripheral regions of the base (17) of the fixing means (16) next to the recess (33) in the base are of an at least approximately hook-shaped design.

13. Projection screen (3) as claimed in one of claims 1 to 12, **characterised in that** a recess (37) is provided in an end region of the arm (18) facing away from the base (17) of the fixing means (16) across its entire length and the two partial end regions created as a result may optionally be of an at least approximately hook-shaped design.

14. Projection wall (1) for reproducing projected images with a projection screen (3) made from a reflecting or light-transmitting flexible material, and with a frame system (2) accommodating the projection screen (3) which comprises several frame elements (4), and the latter are provided in the form of a profiled section (5) with side faces (6) with an internal and an external wall which have at least one recess (8) along their longitudinal direction which is bounded by the external wall of the side faces (6) of the profiled section (5), and a cross-section of the recess (8) preferably widens in the direction towards a recess base, and the at least one recess (8) is provided as a means of accommodating fixing means (16) disposed on the projection screen (3), **characterised in that** the projection screen (3) is of the type as claimed in at least one of claims 1 to 15, and the fixing means (16) are disposed in the recess (8) so that they are able to slide along the longitudinal axis (22) of the profiled section (5).

15. Projection wall (1) as claimed in claim 14, **characterised in that** several recesses (8) are disposed in at least one side face (6) of the profiled section (5).

16. Projection wall (1) as claimed in claim 14, **characterised in that** the recesses (8) are disposed in side faces (6) of the profiled section (5) lying opposite one another.

17. Projection wall (1) as claimed in one of claims 14 to 16, **characterised in that** the recess (8) has a U-shaped or semi-circular or polygonal or trapezoid-shaped or V-shaped cross-section.

18. Projection wall (1) as claimed in claims 14 to 17, **characterised in that** the fixing means (16) are adapted to the cross-section of the profiled section (5).

## Revendications

1. Toile d'écran de projection (3) en un matériau flexible réfléchissant ou translucide pour la reproduction d'images projetées, avec une face avec des zones d'extrémité (15) aux côtés longitudinaux et transversaux (12, 13) de la face, dans lesquelles sont disposés des moyens de fixation (16) avec une base (17) pour la retenue de la toile d'écran de projection (3) à un ou plusieurs éléments de cadre (4) d'un système de cadre (2) et sont reliés à la toile d'écran de projection (3), où les moyens de fixation (16) sont répartis à des espacements réguliers sur tout le côté longitudinal et transversal (12, 13) de la toile d'écran de protection (3), **caractérisée en ce que** sont réalisés à la base (17) des moyens de fixation (16) deux branches opposées l'une à l'autre (18), qui sont reliées l'une à l'autre par la base (17) de sorte que le moyen de fixation (16) présente une section transversale en forme de C ou de U, ou bien qu'il est disposé à la base (17), pour la réalisation d'une section transversale en forme de L, une branche (18) faisant saillie de celle-ci, **en ce qu'**est ou sont réalisée(s) en outre une zone d'extrémité, éloignée de la base (17), des branches (18) ou de la branche (18) et/ou la base (17) au moins approximativement en forme de clip, pour clipser les moyens de fixation (16) dans des évidements (8) des éléments de cadre (4), et **en ce que** les moyens de fixation (16) sont fixés avec la base sur la toile d'écran de protection (3) ou bien qu'il est disposé entre le moyen de fixation (16) et la toile d'écran de protection (3) un élément de liaison (19), où l'élément de liaison (19) comprend une plaque de base pour la liaison sur une grande face de l'élément de liaison avec la toile d'écran de protection, sur laquelle est disposé un élément d'enclenchement (34) pour l'enclenchement de la base de l'élément de fixation (16).

2. Toile d'écran de protection (3) selon la revendication 1, **caractérisée en ce que** le moyen de fixation (16) est réalisé avec une élasticité de ressort.

3. Toile d'écran de projection (3) selon l'une des revendications 1 ou 2, caractérisée en qu'il est disposé au moyen de fixation (16) entre les deux branches (18) au moins une nervure (26) dans la même direction des branches (18).

4. Toile d'écran de protection (3) selon l'une des revendications 1 à 3, **caractérisée en ce que** la liaison d'au moins une partie du moyen de fixation (16) avec la toile d'écran de protection (3) est réalisée par vissage, collage, agrafage, serrage, soudage, par exemple soudage à ultrasons.

5. Toile d'écran de protection (3) selon l'une des revendications 1 à 4, **caractérisée en ce que** les moyens de fixation (16) sur la toile d'écran de protection (3) sont ajustables le long de leur extension longitudinale par l'élément de liaison (19).

6. Toile d'écran de protection (3) selon l'une des revendications 1 à 5, **caractérisée en ce qu'**est réalisé dans la zone des moyens de fixation (16) et/ou dans les zones d'extrémité (15) un renforcement de la face, par exemple par repliage de la toile d'écran de protection dans les zones d'extrémité.

7. Toile d'écran de protection (3) selon l'une des revendications 1 à 6, **caractérisée en ce que** la plaque de base de l'élément de liaison (19) est en forme de disque.

8. Toile d'écran de projection (3) selon la revendication 7, **caractérisée en ce que** l'élément d'enclenchement (34), vu en section transversale, est réalisé au moins approximativement en forme de u, avec une base (41) orientée en particulier au moins approximativement parallèlement à la plaque de base (39) et deux nervures (40) disposées sur celle-ci, où les nervures (40) sont reliées à la plaque de base (39) de telle sorte qu'il est produit entre la plaque de base (39) et la base (41) un évidement pour le moyen de fixation (16).

9. Toile d'écran de projection (30) selon la revendication 7 ou 8, **caractérisée en ce que** la plaque de base (39) est constituée d'un matériau synthétique apte à être soudé.

10. Toile d'écran de projection (3) selon la revendication 8 ou 9, **caractérisée en ce qu'**il est ménagé dans la base (41) de l'élément d'enclenchement (34) un évidement (42) pour la réception d'un moyen de fixation alternatif (16), en particulier pour la réception d'un bouton pression.

11. Toile d'écran de projection (3) selon l'une des revendications 1 à 10, **caractérisée en ce que** la base (17) du moyen de fixation (16) présente un évidement (33) s'étendant d'une zone de bord opposée à la branche (18) en direction de la branche (18).

12. Toile d'écran de projection (3) selon la revendication 11, **caractérisée en ce que** les zones de bord de la base (17) du moyen de fixation (16), qui subsistent à côté de l'évidement (33) dans la base, sont réalisées au moins approximativement en forme de crochet.

13. Toile d'écran de projection (3) selon l'une des revendications 1 à 12, **caractérisée en ce qu'**il est disposé dans une zone d'extrémité de la branche (18) éloignée de la base (17) du moyen de fixation (16), sur toute la largeur de celle-ci, un évidement (37), et les deux zones d'extrémité partielles ainsi produites sont réalisées le cas échéant également au moins approximativement en forme de crochet.

14. Ecran de projection (1) pour la reproduction d'images projetées avec une toile d'écran de projection (3) en un matériau flexible réfléchissant ou translucide, et avec un système de cadre (2) recevant la toile d'écran de projection (3) constitué de plusieurs éléments de cadre (4), où ceux-ci sont formés par un profil (5) avec des faces latérales (6) avec une paroi intérieure et une paroi extérieure qui présentent dans leur direction longitudinale au moins un évidement (8), qui sont délimités par la paroi extérieure des faces latérales (6) du profil (5), et de préférence, une section transversale de l'évidement (8) s'élargit en direction d'un fond d'évidement, où le au moins un évidement (8) est réalisé pour la réception de moyens de fixation (16) disposés à la toile d'écran de projection (3), **caractérisé en ce que** la toile d'écran de projection (3) est réalisée selon au moins une des revendications 1 à 15, où les moyens de fixation (16) sont disposés d'une manière déplaçable dans l'évidement (8) le long de l'axe longitudinal (22) du profil (5).

15. Ecran de projection (1) selon la revendication 14, **caractérisé en ce qu'**au moins dans une des faces latérales (6) du profilé (5), plusieurs évidements (8) sont disposés.

16. Ecran de projection (1) selon la revendication 14, **caractérisé en ce que** les évidements (8) sont disposés dans des faces latérales (6) opposées l'une à l'autre du profilé (5).

17. Ecran de projection (1) selon l'une des revendications 14 à 16, **caractérisé en ce que** l'évidement (8) présente une section transversale en forme de U ou demi-ronde ou polygonale ou en forme de trapèze ou en forme de V.

18. Ecran de projection (1) selon la revendication 14 à 17, **caractérisé en ce que** les moyens de fixation (16) sont adaptés à la section transversale du profilé (5).
